# EUROPEAN PATENT SPECIFICATION

(11) **EP 2 248 854 B1**
(45) Date of publication and mention of the grant of the patent: **31.10.2018**
(21) Application number: 09715230.0
(22) Date of filing: 03.02.2009
(51) Int. Cl.: C08J 3/12, C08J 3/20, C08K 5/12, C08J 3/18

(54) **VINYL CHLORIDE RESIN COMPOSITION FOR POWDER MOLDING, VINYL CHLORIDE RESIN MOLDED BODY, LAMINATE, AUTOMOBILE INTERIOR MATERIAL, AND METHOD FOR PRODUCING VINYL CHLORIDE RESIN COMPOSITION FOR POWDER MOLDING**
VINYLCHLORIDHARZZUSAMMENSETZUNG FÜR PULVERFORMUNG, MIT VINYLCHLORIDHARZZUSAMMENSETZUNG GEFORMTER KÖRPER, LAMINAT, AUTOMOBILINNENMATERIAL SOWIE VERFAHREN ZUR HERSTELLUNG EINER VINYLCHLORIDHARZZUSAMMENSETZUNG FÜR PULVERFORMUNG
COMPOSITION DE RÉSINE DE CHLORURE DE VINYLE POUR LE MOULAGE À PARTIR DE POUDRES, CORPS MOULÉ DE RÉSINE DE CHLORURE DE VINYLE, STRATIFIÉ, MATÉRIAU D'INTÉRIEUR D'AUTOMOBILE ET PROCÉDÉ DE FABRICATION DE LA COMPOSITION DE RÉSINE DE CHLORURE DE VINYLE POUR LE MOULAGE À PARTIR DE POUDRES

(30) Priority: 29.02.2008 JP 2008049345
(43) Date of publication of application: 10.11.2010
(73) Proprietor: Zeon Corporation, Tokyo 100-8246 (JP)
(72) Inventor: HADA, Hiroyuki, Tokyo 100-8246 (JP); YANAI, Koichi, Tokyo 100-8246 (JP)
(74) Representative: Maiwald Patent- und Rechtsanwaltsgesellschaft mbH
(86) International application number: PCT/JP2009/051769
(87) International publication number: WO 2009/107463

(56) References cited:
- EP-A2- 0 672 709
- JP-A- 2 138 355
- JP-A- 5 017 648
- JP-A- 5 017 648
- JP-A- 5 117 473
- JP-A- 6 246 761
- JP-A- 6 246 761
- JP-A- 6 279 642
- JP-A- 10 120 854
- JP-A- H05 279 485
- US-A- 5 994 439

## Description

### Technical Field

The present invention relates to: a vinyl chloride resin composition for powder molding which has excellent powder flowability and results in a molded object with excellent heat aging resistance and low-temperature resistance; a vinyl chloride resin molded object obtained by powder molding the vinyl chloride resin composition for powder molding; a laminate including a surface of the vinyl chloride resin molded object and polyurethane foam; a vehicle interior material having a surface made of the vinyl chloride resin; and a method for producing the vinyl chloride resin composition for powder molding.

### Background Art

Conventionally, a vinyl chloride resin composition for powder molding has been powder-molded in order to produce surface materials for vehicles, such as instrument panels and door trims. An instrument panel includes, at a part thereof, an airbag door which functions in accordance with an airbag device for a front passenger seat. Conventionally, an airbag door is formed independently of an instrument panel, and is later attached to the instrument panel. However, the management of parting between an opening for an airbag door of the instrument panel and the airbag door is difficult, which disadvantages such later-attachment of the airbag door to the instrument panel in terms of costs. In order to deal with this problem, recently, an airbag door and an instrument panel are molded together. A tear section (thin-walled section) for opening an airbag section is formed by a high-frequency cutter etc. at the backside of a surface material of an instrument panel molded together with an airbag, so that split-opening of the instrument panel is secured when an envelop of the airbag inflates while keeping a good outlook design of the surface. The tear section is designed to break by being pressed by the inflating envelope when a vehicle reduces speed suddenly, and therefore the tear section is susceptible to being broken by impact. In particular, there is a concern for a second accident caused by fragments derived from brittle fracture of a surface material of an instrument panel at low temperature. Therefore, there is a request for great increases both in heat aging resistance and low-temperature resistance.

Patent Literature 1 describes a vinyl chloride resin composition for powder molding, obtained by mixing vinyl chloride resin with a particular trimellitate plasticizer. However, heat aging resistance and low-temperature resistance of a molded object obtained by powder molding the vinyl chloride resin composition are not sufficient.

### [Patent Literature 1]

Japanese Patent Application Publication, Tokukaihei, No. 2-138355 A

### Summary of Invention

### Technical Problem

An object of the present invention is to provide a vinyl chloride resin composition for powder molding which has excellent powder flowability and results in a molded object having excellent heat aging resistance and low-temperature resistance. Another object of the present invention is to provide a vinyl chloride resin molded object obtained by powder molding the vinyl chloride resin composition for powder molding, a laminate including a surface made of the vinyl chloride resin composition and polyurethane foam, a vehicle interior material having a surface made of the vinyl chloride resin composition, and a method for producing the vinyl chloride resin composition.

### Solution to Problem

In order to solve the foregoing problem, the inventors of the present invention has studied a vinyl chloride resin composition including vinyl chloride resin particles and a trimellitate plasticizer, and found that a combination of vinyl chloride resin particles with a particular size made of vinyl chloride resin having large average degree of polymerization and a particular trimellitate plasticizer solves the problem. Thus, the inventors have completed the present invention.

A vinyl chloride resin composition for powder molding of the present invention includes: 100 parts by mass of vinyl chloride resin particles made of vinyl chloride resin whose average degree of polymerization is 1500 to 3000, the vinyl chloride resin particles having an average particle size ranging from 50 to 500 µm; and 110 to 150 parts by mass of a trimellitate plasticizer represented by general formula (1) 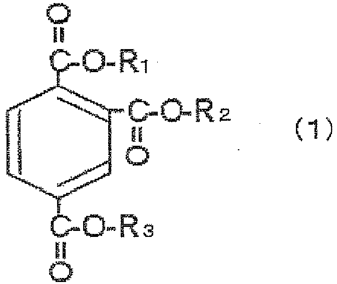 wherein R₁ to R₃ represent an alkyl group and may be identical with each other or different from each other, a linear chain ratio of R₁ to R₃ is 95 mol% or more, a ratio of an alkyl group having 7 carbons or less to whole alkyl groups of R₁ to R₃ ranges from 0 to 10 mol%, a ratio of an alkyl group having 8 or 9 carbons to whole alkyl groups of R₁ to R₃ ranges from 0 to 85 mol%, a ratio of an alkyl group having 10 carbons to whole alkyl groups of R₁ to R₃ ranges from 15 to 100 mol%, a ratio of an alkyl group having 11 or more carbons to whole alkyl groups of R₁ to R₃ ranges from 0 to 10 mol%, and the linear chain ratio is a ratio of a linear chain alkyl group to whole alkyl groups of R₁ to R₃.

The ratio of an alkyl group having 8 or 9 carbons to whole alkyl groups of R₁ to R₃ ranges preferably from 0 to 75 mol%, and the ratio of an alkyl group having 10 carbons to whole alkyl groups of R₁ to R₃ ranges preferably from 25 to 100 mol%.

The ratio of an alkyl group having 8 or 9 carbons to whole alkyl groups of R₁ to R₃ ranges more preferably from 35 to 65 mol%, and the ratio of an alkyl group having 10 carbons to whole alkyl groups of R₁ to R₃ ranges more preferably from 35 to 65 mol%.

The average particle size of the vinyl chloride resin particles ranges preferably from 50 to 250 µm. The average particle size of the vinyl chloride resin particles ranges more preferably from 100 to 200 µm.

It is preferable to arrange the vinyl chloride resin composition for powder molding of the present invention to further include 1 to 30 parts by mass of a dusting agent with respect to 100 parts by mass of the vinyl chloride resin particles, the dusting agent being made of vinyl chloride resin fine particles of 0.1 to 10 µm in average particle size.

An average degree of polymerization of vinyl chloride resin constituting the vinyl chloride resin fine particles ranges preferably from 500 to 2000. An average degree of polymerization of vinyl chloride resin constituting the vinyl chloride resin particles ranges more preferably from 800 to 1500. It is preferable to arrange the vinyl chloride resin composition for powder molding so that the dusting agent made of the vinyl chloride resin fine particles is in a range of 10 to 25 parts by mass with respect to 100 parts by mass of the vinyl chloride resin particles.

A vinyl chloride resin molded object of the present invention is obtained by powder molding said vinyl chloride resin composition for powder molding.

A laminate of the present invention includes a surface of the vinyl chloride resin molded object and polyurethane foam.

A vehicle interior material of the present invention has a surface made of the vinyl chloride resin molded object.

A method for producing a vinyl chloride resin composition for powder molding of the present invention includes the step of mixing (i) 100 parts by mass of vinyl chloride resin particles made of vinyl chloride resin whose average degree of polymerization is 1500 to 3000, the vinyl chloride resin particles having an average particle size ranging from 50 to 500 µm, with (ii) 110 to 150 parts by mass of a trimellitate plasticizer represented by general formula (1).

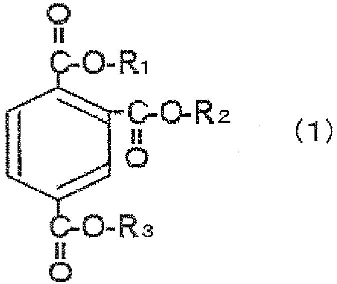

It is preferable to arrange the method for producing a vinyl chloride resin composition for powder molding of the present invention such that a dusting agent made of vinyl chloride resin fine particles of 0.1 to 10µm in average particle size is mixed with the vinyl chloride resin particles in such a manner that the dusting agent is in a range of 10 to 25 parts by mass with respect to 100 parts by mass of the vinyl chloride resin particles.

Mixing is preferably performed by dry blending.

### Advantageous Effects of Invention

The vinyl chloride resin composition for powder molding of the present invention has excellent powder flowability. The vinyl chloride resin composition for powder molding of the present invention results in a molded object having excellent heat aging resistance and low-temperature resistance.

### Description of Embodiments

A vinyl chloride resin composition for powder molding of the present invention contains vinyl chloride resin particles. Vinyl chloride resin constituting the vinyl chloride resin particles contains copolymers containing preferably 50 wt% or more of a vinyl chloride unit, more preferably 70 wt% or more of a vinyl chloride unit, in addition to homopolymers of vinyl chloride. Specific examples of comonomers of the vinyl chloride copolymers include: olefins such as ethylene and propylene; olefin halides such as allyl chloride, vinylidene chloride, vinyl fluoride, and ethylene chloride trifluoride; carboxylate vinyl esters such as vinyl acetate and vinyl propionate; vinyl ethers such as isobutyl vinyl ether and cetyl vinyl ether; allyl ethers such as allyl-3-chloro-2-oxypropyl ether and allyl glycidyl ether; unsaturated carboxylic acids and esters thereof and acid anhydrides thereof such as acrylic acid, maleic acid, itaconic acid, acrylic acid-2-hydroxyethyl, methyl methacrylate, monomethyl maleate, diethyl maleate, and anhydrous maleic acid; unsaturated nitriles such as acrylic nitrile and methacrylonitrile, acrylic amides such as acrylic amide, N-methylol acrylic amide, acrylic amide-2-methyl propane sulfonic acid, and (metha)acrylamide propyltrimethyl ammonium chloride; and allylamines and derivatives thereof such as allylamine benzoate and diallyl dimethyl ammonium chloride. The above monomers are only parts of monomers capable of copolymerizing with vinyl chloride, and monomers shown on page 75 to 104 of "Poly(vinyl chloride)" (edited by THE KINKI CHEMICAL SOCIETY JAPAN, published by Nikkan Kogyo Shimbun Ltd., 1988) can be used as the monomers capable of copolymerizing with vinyl chloride. One or a combination of two or more of the monomers can be used. The vinyl chloride resin includes resin obtained by graft-polymerizing resin such as an ethylene-vinyl acetate copolymer, an ethylene-methyl methacrylate copolymer, ethylene-ethyl acrylate copolymer, or chlorinated polyethylene with (1) vinyl chloride or (2) vinyl chloride and the copolymerizable monomer described above.

The vinyl chloride resin can be produced by conventionally known methods such as suspension polymerization, emulsion polymerization, solution polymerization, and bulk polymerization. In particular, vinyl chloride resin produced by the suspension polymerization is preferable.

The average degree of polymerization of the vinyl chloride resin is 1500 to 3000. If the average degree of polymerization of the vinyl chloride resin is less than 1500, the powder flowability of the vinyl chloride resin composition for powder molding drops.

The average particle size of the vinyl chloride resin particles contained in the vinyl chloride resin composition for powder molding of the present invention ranges from 50 to 500 µm, preferably ranges from 50 to 250 µm, and more preferably ranges from 100 to 200 µm. If the average particle size of the vinyl chloride resin particles is less than 50 µm, the powder flowability of the vinyl chloride resin composition for powder molding drops. On the other hand, if the average particle size of the vinyl chloride resin particles is more than 500 µm, smoothness of a molded object obtained by molding the vinyl chloride resin composition for powder molding is impaired.

The vinyl chloride resin composition for powder molding of the present invention contains a trimellitate plasticizer represented by the following formula (1).

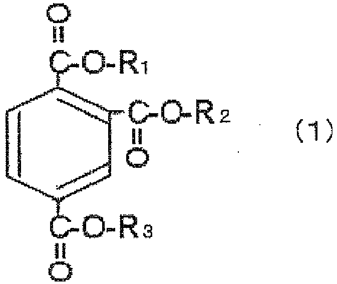

In the formula (1), R₁ to R₃ represent an alkyl group and may be identical with each other or different from each other. A linear chain ratio of R₁-R₃ is 95 mol% or more. If the linear chain ratio is less than 95 mol%, low-temperature resistance of a molded object obtained by powder molding the vinyl chloride resin composition for powder molding drops. The linear chain ratio is a ratio of a linearly chained alkyl group to whole alkyl groups of R₁-R₃. Specific examples of the linearly chained alkyl groups include a methyl group, an ethyl group, an n-propyl group, an n-butyl group, an n-pentyl group, an n-hexyl group, an n-heptyl group, an n-octyl group, an n-nonyl group, an n-decyl group, an n-undecyl group, an n-dodecyl group, an n-tridecyl group, an n-hexadecyl group, an n-pentadecyl group, an n-hexadecyl group, an n-heptadecyl group, and an n-stearyl group. Specific examples of branched alkyl groups include an i-propyl group, an i-butyl group, an i-pentyl group, an i-hexyl group, an i-heptyl group, an i-octyl group, an i-nonyl group, an i-decyl group, an i-undecyl group, an i-dodecyl group, an i-tridecyl group, an i-hexadecyl group, an i-pentadecyl group, an i-hexadecyl group, an i-heptadecyl group, an i-octadecyl group, a t-butyl group, a t-pentyl group, a t-hexyl group, a t-heptyl group, a t-octyl group, a t-nonyl group, a t-decyl group, a t-undecyl group, a t-dodecyl group, a t-tridecyl group, a t-hexadecyl group, a t-pentadecyl group, a t-hexadecyl group, a t-heptadecyl group, a t-octadecyl group, and a 2-ethylhexyl group. A ratio of an alkyl group having 7 carbons or less to whole alkyl groups of R₁-R₃ is 0-10 mol%. If the ratio of an alkyl group having 7 carbons or less is more than 10 mol%, the low-temperature resistance of the molded object obtained by powder molding the vinyl chloride resin composition for powder molding drops. A ratio of an alkyl group having 8 or 9 carbons to whole alkyl groups of R₁-R₃ ranges from 0-85 mol%, preferably from 0-75 mol%, and further preferably from 35-65 mol%. If the ratio of an alkyl group having 8 or 9 carbons is more than 85 mol%, a vinyl chloride resin composition for powder molding drops its powder flowability, and a molded object obtained by powder molding the vinyl chloride resin composition for powder molding drops its heat aging resistance. A ratio of an alkyl group having 10 carbons to whole alkyl groups of R₁-R₃ ranges from 15-100 mol%, preferably from 25-100 mol%, and further preferably from 35-65 mol%. If the ratio of an alkyl group having 10 carbons is less than 15 mol%, the heat aging resistance and the low-temperature resistance of the molded object obtained by powder molding the vinyl chloride resin composition for powder molding drop. A ratio of an alkyl group having 11 or more carbons to whole alkyl groups of R₁-R₃ ranges from 0-10 mol%. If the ratio of an alkyl group having 11 or more carbons is more than 10 mol%, the heat aging resistance of the molded object obtained by powder molding the vinyl chloride resin composition for powder molding drops.

The trimellitate plasticizer used in the present invention may be a single compound or may be a mixture of plural components. In general, commercially available trimellitate plasticizers are mixtures. Among such commercially-available mixtures, a mixture which meets the above requirements is selected.

The amount of the trimellitate plasticizer to be blended ranges from 110-150 parts by mass with respect to 100 parts by mass of vinyl chloride resin. If the amount of the trimellitate plasticizer to be blended is less than 110 parts by mass with respect to 100 parts by mass of vinyl chloride resin, the heat aging resistance and the low-temperature resistance of the molded object obtained by powder molding the vinyl chloride resin composition for powder molding drops. If the amount of the trimellitate plasticizer to be blended is more than 150 parts by mass with respect to 100 parts by mass of vinyl chloride resin, the powder flowability and the moldability of the vinyl chloride resin composition for powder molding drop.

The vinyl chloride resin composition for powder molding of the present invention may contain a dusting agent (powder flowability reforming agent). Specific examples of the dusting agent include: inorganic fine particles such as calcium carbonate, talc, aluminum oxide; and organic fine particles such as vinyl chloride resin fine particles, polyacrylonitrile resin fine particles, poly(meth)acrylate resin fine particles, polystyrene resin fine particles, polyethylene resin fine particles, polypropylene resin fine particles, polyester resin fine particles, and polyamide resin fine particles. In particular, inorganic fine particles whose average particle size ranges from 10 to 100 nm and vinyl chloride resin fine particles whose average particle size ranges from 0.1 to 10 µm are preferable. A degree of polymerization of vinyl chloride resin which constitutes vinyl chloride resin fine particles serving as a dusting agent ranges from 500 to 2000, and preferably from 800 to 1500. The mixture amount of the vinyl chloride resin fine particles serving as a dusting agent ranges from 1 to 30 parts by mass, preferably from 10 to 25 parts by mass with respect to 100 parts by mass of vinyl chloride resin particles constituted by vinyl chloride resin whose average degree of polymerization is 1500 or more.

The vinyl chloride resin composition for powder molding of the present invention may contain, if necessary, additives such as perchloric compound (e.g. sodium perchlorate, potassium perchlorate), an oxidization inhibitor, an ultraviolet absorber, a light stabilizer, a filler, an antistatic agent, a coloring agent, a fire retardant, a foaming agent, a releasing agent, and β-diketones.

A method for mixing the vinyl chloride resin particles, the trimellitate plasticizer, and the additive blended if necessary is not particularly limited. A preferable example of the method for mixing is dry blending.

A molded object is obtained by powder molding the vinyl chloride resin composition for powder molding of the present invention. Specific examples of a method for powder molding are conventional powder molding methods such as fluidized-bed sintering, electrostatic coating, powder thermal spraying, powder rotational molding, and powder slush molding. The molded object is treated as a surface and is laminated with polyurethane foam.

### [Examples]

The following details the present invention by referring to Examples. Note that the present invention is not limited to these Examples.

Physical properties were measured as below.

### (1) Powder flowability

Powder flowability of the vinyl chloride resin composition for powder molding was measured based on JIS-K-6721. 100ml of the vinyl chloride resin composition for powder molding was put in a funnel of a bulk specific gravity measuring device (manufactured by Nihon Abura Shikenki Kogyo Co., Ltd.) and a damper was pulled out. The time (second) from when the vinyl chloride resin composition for powder molding started to fall till when all of the vinyl chloride resin composition fell was measured. As the time is shorter, the powder flowability is higher.

### (2) Heat aging resistance

The vinyl chloride resin composition for powder molding was sprinkled on a textured mold heated up to 250°C, left for 10 seconds to fuse, and then surplus of the vinyl chloride resin composition was shaken down. 60 seconds after sprinkling the vinyl chloride resin composition on the mold, the mold was cooled down by cooling water. When the mold was cooled down to 40°C, a molded sheet of 200mm × 295mm was released from the mold. The molded sheet was spread in a mold of 210mm × 300mm × 10mm, and a mixture of 40g of 4,4'-diphenylmethane diisocyanate (MDI) and 80g of polyether polyol (3 functionalities, hydroxyl value: 50mgKOH/g, containing 1.0 wt% of triethylene diamine and 1.6 wt% of water) was poured onto the molded sheet, and the mold was sealed. After 10 minutes, a sample in which a surface of 1mm in thickness was undercoated with polyurethane foam of 9mm in thickness was taken out of the mold. The sample was put in an oven and heated up to 130°C for 250 hours, and then a surface sheet was peeled off, and the heat aging resistance of the surface sheet was measured based on JIS-K-6301. The surface sheet was punched through by a JIS No. 1 dumbbell, and expansion of the surface sheet was measured at -35°C. The vinyl chloride resin composition was evaluated as having excellent heat aging resistance if the expansion was 150 % or more.

### (3) Low-temperature resistance

The low-temperature resistance of the molded sheet was measured based on JIS-K-6301. The surface sheet was punched through by a JIS No. 1 dumbbell, and expansion of the surface sheet was measured at -35°C. The vinyl chloride resin composition was evaluated as having excellent low-temperature resistance if the expansion was 200 % or more.

### Example 1

100 parts by mass of vinyl chloride resin particles (ZEST2000Z produced by Shin Daiichi Enbi Co., Ltd.) of 124 µm in average particle size, made of vinyl chloride resin whose average degree of polymerization was 2000, 1 part by mass of an oxidization inhibitor (IRGANOX1010, produced by Ciba Specialty Chemicals Inc.), 0.2 parts by mass of a light stabilizer (ADEKA STAB LA-67, produced by ADEKA CORPORATION), 0.3 parts by mass of an ultraviolet absorber (TINUVINP produced by Ciba Specialty Chemicals Inc.), 0.6 parts by mass of a pigment (DA P 1050 white, produced by Dainichiseika Color & Chemicals Mfg. Co., Ltd.), 3.8 parts by mass of a pigment (DA PX 1720(A) black, produced by Dainichiseika Color & Chemicals Mfg. Co., Ltd.), and 0.2 parts by mass of zinc stearate (SZ2000 produced by SAKAI CHEMICAL INDUSTRY Co., Ltd.) were put in a Henschel mixer and mixed with one another. At the time when the temperature of the mixture was up to 80°C, 135 parts by mass of a trimellitate plasticizer (TRIMEX N-08 produced by Kao Corporation) in which linear chain ratios of alkyl groups were 100%, a ratio of an alkyl group having 8 carbons to whole alkyl groups was 85 mol%, and a ratio of an alkyl group having 10 carbons to whole alkyl groups was 15 mol% was added to the mixture. After dry-up (indicating a state when a plasticizer is absorbed in vinyl chloride resin particles and the mixture is dried) and at a stage when the mixture was cooled down to 70°C or less, 18 parts by mass of vinyl chloride resin fine particles (P45W produced by Shin Daiichi Enbi Co., Ltd.) of 1µm in average particle size, made of vinyl chloride resin whose average degree of polymerization of 850, serving as a dusting agent, was added to and mixed with the mixture to prepare a vinyl chloride resin composition for powder molding. The powder flowability of the vinyl chloride resin composition and heat aging resistance and low-temperature resistance of a molded object obtained by powder molding the vinyl chloride resin composition were measured. The results of the measurements are shown in Table 1.

### Example 2

A vinyl chloride resin composition for powder molding was prepared in the same manner as that of Example 1 except that the vinyl chloride resin particles used in Example 1 were replaced with vinyl chloride resin particles (ZEST2500Z produced by Shin Daiichi Enbi Co., Ltd.) of 130 µm in average particle size, made of vinyl chloride resin whose average degree of polymerization was 2500, and that the trimellitate plasticizer used in Example 1 was replaced with 145 parts by mass of a trimellitate plasticizer (monocizer W-796 produced by Dainippon Ink and Chemicals) in which linear chain ratios of alkyl groups are 100%, a ratio of an alkyl group having 8 carbons to whole alkyl groups is 50 mol%, and a ratio of an alkyl group having 10 carbons to whole alkyl groups is 50 mol%. The result of the evaluation is shown in Table 1.

### Comparative Example 1

A vinyl chloride resin composition for powder molding was prepared in the same manner as that of Example 1 except that the trimellitate plasticizer used in Example 1 was replaced with 135 parts by mass of a trimellitate plasticizer (monocizer W-795 produced by Dainippon Ink and Chemicals) in which linear chain ratios of alkyl groups are 100%, a ratio of an alkyl group having 8 carbons to whole alkyl groups is 92.5 mol%, and a ratio of an alkyl group having 10 carbons to whole alkyl groups is 7.5 mol%. The result of the evaluation is shown in Table 1.

### Comparative Example 2

A vinyl chloride resin composition for powder molding was prepared in the same manner as that of Example 1 except that the vinyl chloride resin particles used in Example 1 were replaced with vinyl chloride resin particles (ZEST1300Z produced by Shin Daiichi Enbi Co., Ltd.) of 138 µm in average particle size, made of vinyl chloride resin whose average degree of polymerization was 1300, and that the trimellitate plasticizer used in Example 1 was used in an amount of 98 parts by mass. The result of the evaluation is shown in Table 1.

### Comparative Example 3

A vinyl chloride resin composition for powder molding was prepared in the same manner as that of Example 1 except that the trimellitate plasticizer used in Example 1 was used in an amount of 180 parts by mass. The vinyl chloride resin composition thus prepared did not fall from the funnel of the bulk specific gravity measuring device and consequently the powder flowability of the vinyl chloride resin composition could not be measured. Further, the surface of a sheet obtained by molding the vinyl chloride resin composition by the aforementioned powder molding method was not smooth, and the heat aging resistance and low-temperature resistance of the sheet were not measured.

### Comparative Example 4

A vinyl chloride resin composition for powder molding was prepared in the same manner as that of Example 1 except that the vinyl chloride resin particles used in Example 1 was replaced with vinyl chloride resin particles (ZEST1300Z produced by Shin Daiichi Enbi Co., Ltd.) made of vinyl chloride resin whose average degree of polymerization was 1300. The vinyl chloride resin composition thus prepared did not fall from the funnel of the bulk specific gravity measuring device and consequently the powder flowability of the vinyl chloride resin composition could not be measured. Further, the surface of a sheet obtained by molding the vinyl chloride resin composition by the aforementioned powder molding method was not smooth, and the heat aging resistance and low-temperature resistance of the sheet were not measured.

### Comparative Example 5

A vinyl chloride resin composition for powder molding was prepared in the same manner as that of Example 1 except that the trimellitate plasticizer used in Example 1 was used in an amount of 98 parts by mass. The result of the evaluation is shown in Table 1. However, the vinyl chloride resin composition had low thermal fusibility and consequently could not be molded as a sheet by the aforementioned powder molding method.

**[Table 1]**

| | Ex.1 | Ex. 2 | Com.Ex.1 | Com.Ex.2 | Com.Ex.3 | Com.Ex.4 | Com.Ex.5 |
|---|---|---|---|---|---|---|---|
| Average degree of polymerization of vinyl chloride resin | 2000 | 2500 | 2000 | 1300 | 2000 | 1300 | 2000 |
| Blend amount of vinyl chloride resin (part by mass) | 100 | 100 | 100 | 100 | 100 | 100 | 100 |
| Blend amount of trimellitate plasticizer (part by mass) | 135 | 145 | 135 | 98 | 180 | 135 | 98 |
| Ratio of alkyl group having 10 carbons to whole alkyl | 15 | 50 | 7.5 | 15 | 15 | 15 | 15 |
| Linear chain ratio of alkyl group (%) | 100 | 100 | 100 | 100 | 100 | 100 | 100 |
| Powder flowability (sec.) | 14 | 14 | 16 | 14 | - | - | 14 |
| Heat aging resistance (%) | 150 | 170 | 135 | 45 | - | - | - |
| Low-temperature resistance (%) | 200 | 220 | 200 | 135 | - | - | - |

The powder flowability of the vinyl chloride resin compositions for powder molding in Examples 1 and 2 was high, and the heat aging resistance and low-temperature resistance of a sheet obtained by powder molding these vinyl chloride resin compositions were high, too. The heat aging resistance of a sheet obtained by powder molding the vinyl chloride resin composition for powder molding in Comparative Example 1 which contained the trimellitate plasticizer with a small ratio of an alkyl group having 10 carbons to whole alkyl groups was low. The heat aging resistance and low-temperature resistance of a sheet obtained by powder molding the vinyl chloride resin composition for powder molding in Comparative Example 2 which contained vinyl chloride resin particles made of vinyl chloride resin with small average degree of polymerization and which had little amount of the trimellitate plasticizer blended were low. The powder flowability of the vinyl chloride resin composition for powder molding in Comparative Example 3 which had much amount of the trimellitate plasticizer blended and the powder flowability of the vinyl chloride resin composition for powder molding in Comparative Example 4 which contained vinyl chloride resin particles made of vinyl chloride resin with small average degree of polymerization were so low that the vinyl chloride resin compositions could not be used for powder molding. The thermal fusibility of the vinyl chloride resin composition for powder molding in Comparative Example 5 which had small amount of the trimellitate plasticizer blended was so low that the vinyl chloride resin composition could not be used for powder molding.

### Industrial Applicability

The vinyl chloride resin composition for powder molding of the present invention is preferably molded as a surface of a vehicle interior material such as an instrumental panel and a door trim.

## Claims

1. A vinyl chloride resin composition for powder molding, comprising:
100 parts by mass of vinyl chloride resin particles made of vinyl chloride resin whose average degree of polymerization ranges from 1500 to 3000, the vinyl chloride resin particles having an average particle size ranging from 50 to 500 µm; and
110 to 150 parts by mass of a trimellitate plasticizer represented by general formula (1) 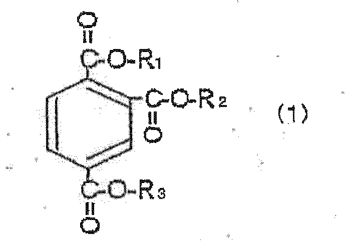 wherein R₁ to R₃ represent an alkyl group and may be identical with each other or different from each other, a linear chain ratio of R₁ to R₃ is 95 mol% or more, a ratio of an alkyl group having 7 carbons or less to whole alkyl groups of R₁ to R₃ ranges from 0 to 10 mol%, a ratio of an alkyl group having 8 or 9 carbons to whole alkyl groups of R₁ to R₃ ranges from 0 to 85 mol%, a ratio of an alkyl group having 10 carbons to whole alkyl groups of R₁ to R₃ ranges from 15 to 100 mol%, a ratio of an alkyl group having 11 or more carbons to whole alkyl groups of R₁ to R₃ ranges from 0 to 10 mol%, and the linear chain ratio is a ratio of a linear chain alkyl group to whole alkyl groups of R₁ to R₃.

2. The vinyl chloride resin composition for powder molding as set forth in claim 1, comprising:
100 parts by mass of vinyl chloride resin particles made of vinyl chloride resin whose average degree of polymerization is 1500 to 3000, the vinyl chloride resin particles having an average particle size ranging from 50 to 500 µm; and
110 to 150 parts by mass of a trimellitate plasticizer represented by general formula (1) 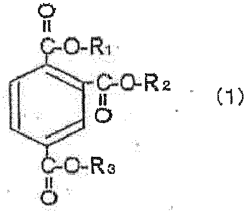 wherein R₁ to R₃ represent an alkyl group and may be identical with each other or different from each other, a linear chain ratio of R₁ to R₃ is 95 mol% or more, a ratio of an alkyl group having 7 carbons or less to whole alkyl groups of R₁ to R₃ ranges from 0 to 10 mol%, a ratio of an alkyl group having 8 or 9 carbons to whole alkyl groups of R₁ to R₃ ranges from 0 to 75 mol%, a ratio of an alkyl group having 10 carbons to whole alkyl groups of R₁ to R₃ ranges from 25 to 100 mol%, a ratio of an alkyl group having 11 or more carbons to whole alkyl groups of R₁ to R₃ ranges from 0 to 10 mol%, and the linear chain ratio is a ratio of a linear chain alkyl group to whole alkyl groups of R₁ to R₃.

3. The vinyl chloride resin composition for powder molding as set forth in any one of claims 1 to 2, wherein the average particle size of the vinyl chloride resin particles ranges from 50 to 250 µm.

4. The vinyl chloride resin composition for powder molding as set forth in any one of claims 1 to 3, wherein the average particle size of the vinyl chloride resin particles ranges from 100 to 200 µm.

5. The vinyl chloride resin composition for powder molding as set forth in any one of claims 1 to 4, further comprising 1 to 30 parts by mass of a dusting agent with respect to 100 parts by mass of the vinyl chloride resin particles, the dusting agent being made of vinyl chloride resin fine particles of 0.1 to 10 µm in average particle size.

6. The vinyl chloride resin composition for powder molding as set forth in claim 5, wherein an average degree of polymerization of vinyl chloride resin constituting the vinyl chloride resin fine particles ranges from 500 to 2000.

7. The vinyl chloride resin composition for powder molding as set forth in claim 5 or 6, wherein an average degree of polymerization of vinyl chloride resin constituting the vinyl chloride resin particles ranges from 800 to 1500.

8. The vinyl chloride resin composition for powder molding as set forth in any one of claims 5 to 7, wherein the dusting agent made of the vinyl chloride resin fine particles is in a range of 10 to 25 parts by mass with respect to 100 parts by mass of the vinyl chloride resin particles.

9. A vinyl chloride resin molded object, obtained by powder molding the vinyl chloride resin composition for powder molding as set forth in any one of claims 1 to 8.

10. A laminate, including a surface of the vinyl chloride resin molded object as set forth in claim 9 and polyurethane foam.

11. A vehicle interior material, having a surface made of the vinyl chloride resin molded object as set forth in claim 9.

12. A method for producing the vinyl chloride resin composition for powder molding as set forth in claim 1, comprising the step of mixing (i) 100 parts by mass of vinyl chloride resin particles made of vinyl chloride resin whose average degree of polymerization ranges from 1500 to 3000, the vinyl chloride resin particles having an average particle size ranging from 50 to 500 µm, with (ii) 110 to 150 parts by mass of a trimellitate plasticizer represented by general formula (1) 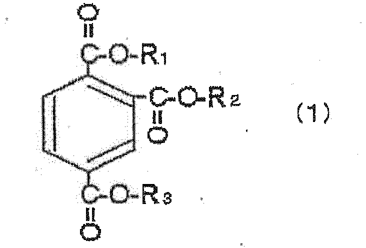 wherein R₁ to R₃ represent an alkyl group and may be identical with each other or different from each other, a linear chain ratio of R₁ to R₃ is 95 mol% or more, a ratio of an alkyl group having 7 carbons or less to whole alkyl groups of R1 to R3 ranges from 0 to 10 mol%, a ratio of an alkyl group having 8 or 9 carbons to whole alkyl groups of R₁ to R₃ ranges from 0 to 85 mol%, a ratio of an alkyl group having 10 carbons to whole alkyl groups of R₁ to R₃ ranges from 15 to 100 mol%, a ratio of an alkyl group having 11 or more carbons to whole alkyl groups of R₁ to R₃ ranges from 0 to 10 mol%, and the linear chain ratio is a ratio of a linear chain alkyl group to whole alkyl groups of R₁ to R₃.

13. The method for producing the vinyl chloride resin composition for powder molding as set forth in claim 12, wherein a dusting agent made of vinyl chloride resin fine particles of 0.1 to 10µm in average particle size is mixed in such a manner that the dusting agent is in a range of 1 to 30 parts by mass with respect to 100 parts by mass of the vinyl chloride resin particles.

14. The method for producing the vinyl chloride resin composition for powder molding as set forth in claim 12 or 13, wherein mixing is performed by dry blending.

## Patentansprüche

1. Vinylchloridharz-Zusammensetzung zum Pulverschmelzen, umfassend:
100 Gewichtsteile Vinylchloridharz-Teilchen, hergestellt aus Vinylchloridharz, dessen durchschnittlicher Polymerisationsgrad im Bereich von 1500 bis 3000 liegt, wobei die Vinylchloridharz-Teilchen eine durchschnittliche Teilchengröße im Bereich von 50 bis 500 µm aufweisen; sowie
110 bis 150 Gewichtsteile eines Trimellitat-Weichmachers, dargestellt durch die allgemeine Formel (1) 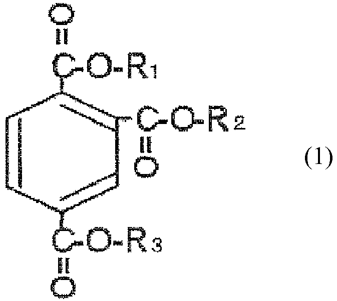 worin R₁ bis R₃ eine Alkylgruppe darstellen und gleich oder unterschiedlich sein können, ein Anteil an linearen Ketten von R₁ bis R₃ 95 mol-% oder mehr beträgt, ein Verhältnis einer Alkylgruppe mit 7 oder weniger Kohlenstoffatomen zu den gesamten Alkylgruppen von R₁ bis R₃ im Bereich von 0 bis 10 mol-% liegt, ein Verhältnis einer Alkylgruppe mit 8 oder 9 Kohlenstoffatomen zu den gesamten Alkylgruppen von R₁ bis R₃ im Bereich von 0 bis 85 mol-% liegt, ein Verhältnis einer Alkylgruppe mit 10 Kohlenstoffatomen zu den gesamten Alkylgruppen von R₁ bis R₃ im Bereich von 15 bis 100 mol-% liegt, ein Verhältnis einer Alkylgruppe mit 11 oder mehr Kohlenstoffatomen zu den gesamten Alkylgruppen von R₁ bis R₃ im Bereich von 0 bis 10 mol-% liegt, und
der Anteil an linearen Ketten ein Verhältnis einer linearkettigen Alkylgruppe zu den gesamten Alkylgruppen von R₁ bis R₃ darstellt.

2. Vinylchloridharz-Zusammensetzung zum Pulverschmelzen gemäß Anspruch 1, umfassend:
100 Gewichtsteile Vinylchloridharz-Teilchen, hergestellt aus Vinylchloridharz, dessen durchschnittlicher Polymerisationsgrad 1500 bis 3000 beträgt, wobei die Vinylchloridharz-Teilchen eine durchschnittliche Teilchengröße im Bereich von 50 bis 500 µm aufweisen; sowie
110 bis 150 Gewichtsteile eines Trimellitat-Weichmachers, dargestellt durch die allgemeine Formel (1) 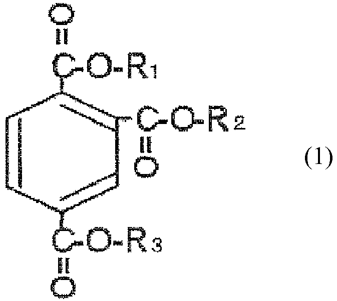 worin R₁ bis R₃ eine Alkylgruppe darstellen und gleich oder unterschiedlich sein können, ein Anteil an linearen Ketten von R₁ bis R₃ 95 mol-% oder mehr beträgt, ein Verhältnis einer Alkylgruppe mit 7 oder weniger Kohlenstoffatomen zu den gesamten Alkylgruppen von R₁ bis R₃ im Bereich von 0 bis 10 mol-% liegt, ein Verhältnis einer Alkylgruppe mit 8 oder 9 Kohlenstoffatomen zu den gesamten Alkylgruppen von R₁ bis R₃ im Bereich von 0 bis 75 mol-% liegt, ein Verhältnis einer Alkylgruppe mit 10 Kohlenstoffatomen zu den gesamten Alkylgruppen von R₁ bis R₃ im Bereich von 25 bis 100 mol-% liegt, ein Verhältnis einer Alkylgruppe mit 11 oder mehr Kohlenstoffatomen zu den gesamten Alkylgruppen von R₁ bis R₃ im Bereich von 0 bis 10 mol-% liegt, und
der Anteil an linearen Ketten ein Verhältnis einer linearkettigen Alkylgruppe zu den gesamten Alkylgruppen von R₁ bis R₃ darstellt.

3. Vinylchloridharz-Zusammensetzung zum Pulverschmelzen gemäß einem der Ansprüche 1 bis 2, wobei die durchschnittliche Teilchengröße der Vinylchloridharz-Teilchen im Bereich von 50 bis 250 µm liegt.

4. Vinylchloridharz-Zusammensetzung zum Pulverschmelzen gemäß einem der Ansprüche 1 bis 3, wobei die durchschnittliche Teilchengröße der Vinylchloridharz-Teilchen im Bereich von 100 bis 200 µm liegt.

5. Vinylchloridharz-Zusammensetzung zum Pulverschmelzen gemäß einem der Ansprüche 1 bis 4, weiter umfassend 1 bis 30 Gewichtsteile eines Staubmittels bezogen auf 100 Gewichtsteile Vinylchloridharz-Teilchen, wobei das Staubmittel aus feinen Vinylchloridharz-Teilchen mit einer durchschnittlichen Teilchengröße von 0,1 bis 10 µm hergestellt wird.

6. Vinylchloridharz-Zusammensetzung zum Pulverschmelzen gemäß Anspruch 5, wobei ein durchschnittlicher Polymerisationsgrad des Vinylchloridharzes, das die feinen Vinylchloridharz-Teilchen darstellt, im Bereich von 500 bis 2000 liegt.

7. Vinylchloridharz-Zusammensetzung zum Pulverschmelzen gemäß einem der Ansprüche 5 oder 6, wobei ein durchschnittlicher Polymerisationsgrad des Vinylchloridharzes, das die feinen Vinylchloridharz-Teilchen darstellt, im Bereich von 800 bis 1500 liegt.

8. Vinylchloridharz-Zusammensetzung zum Pulverschmelzen gemäß einem der Ansprüche 5 bis 7, wobei das aus den feinen Vinylchloridharz-Teilchen hergestellte Staubmittel in einem Bereich von 10 bis 25 Gewichtsteilen bezogen auf 100 Gewichtsteile Vinylchloridharz-Teilchen vorliegt.

9. Aus Vinylchloridharz geformter Gegenstand, erhalten durch Pulverschmelzen der Vinylchloridharz-Zusammensetzung zum Pulverschmelzen gemäß einem der Ansprüche 1 bis 8.

10. Laminat, einschließend eine Oberfläche des aus Vinylchloridharz geformten Gegenstands gemäß Anspruch 9 sowie Polyurethanschaum.

11. Automobilinnenraum-Material mit einer Oberfläche, hergestellt aus dem aus Vinylchloridharz geformten Gegenstand gemäß Anspruch 9.

12. Verfahren zur Herstellung der Vinylchloridharz-Zusammensetzung zum Pulverschmelzen gemäß Anspruch 1, umfassend den Schritt des Mischens (i) von 100 Gewichtsteilen Vinylchloridharz-Teilchen, hergestellt aus Vinylchloridharz, dessen durchschnittlicher Polymerisationsgrad im Bereich von 1500 bis 3000 liegt, wobei die Vinylchloridharz-Teilchen eine durchschnittliche Teilchengröße im Bereich von 50 bis 500 µm aufweisen, mit (ii) 110 bis 150 Gewichtsteilen eines Trimellitat-Weichmachers, dargestellt durch die allgemeine Formel (1) 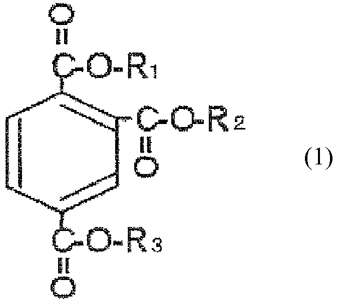
worin R₁ bis R₃ eine Alkylgruppe darstellen und gleich oder unterschiedlich sein können, ein Anteil an linearen Ketten von R₁ bis R₃ 95 mol-% oder mehr beträgt, ein Verhältnis einer Alkylgruppe mit 7 oder weniger Kohlenstoffatomen zu den gesamten Alkylgruppen von R₁ bis R₃ im Bereich von 0 bis 10 mol-% liegt, ein Verhältnis einer Alkylgruppe mit 8 oder 9 Kohlenstoffatomen zu den gesamten Alkylgruppen von R₁ bis R₃ im Bereich von 0 bis 85 mol-% liegt, ein Verhältnis einer Alkylgruppe mit 10 Kohlenstoffatomen zu den gesamten Alkylgruppen von R₁ bis R₃ im Bereich von 15 bis 100 mol-% liegt, ein Verhältnis einer Alkylgruppe mit 11 oder mehr Kohlenstoffatomen zu den gesamten Alkylgruppen von R₁ bis R₃ im Bereich von 0 bis 10 mol-% liegt, und
der Anteil an linearen Ketten ein Verhältnis einer linearkettigen Alkylgruppe zu den gesamten Alkylgruppen von R₁ bis R₃ darstellt.

13. Verfahren zur Herstellung der Vinylchloridharz-Zusammensetzung zum Pulverschmelzen gemäß Anspruch 12, wobei ein aus feinen Vinylchloridharz-Teilchen mit einer durchschnittlichen Teilchengröße von 0,1 bis 10 µm hergestelltes Staubmittel derart beigemischt wird, dass das Staubmittel in einem Bereich von 1 bis 30 Gewichtsteilen bezogen auf 100 Gewichtsteile der Vinylchloridharz-Teilchen vorliegt.

14. Verfahren zur Herstellung der Vinylchloridharz-Zusammensetzung zum Pulverschmelzen gemäß einem der Ansprüche 12 oder 13, wobei das Mischen mittels Trockenvermischung erfolgt.

## Revendications

1. Composition de résine de chlorure de vinyle pour moulage à partir de poudres, comprenant :
100 parties en masse de particules de résine de chlorure de vinyle faites d'une résine de chlorure de vinyle dont le degré moyen de polymérisation est situé dans la plage allant de 1500 à 3000, les particules de résine de chlorure de vinyle ayant une granulométrie moyenne située dans la plage allant de 50 à 500 µm ; et
110 à 150 parties en masse d'un plastifiant trimellitate représenté par la formule générale (1) 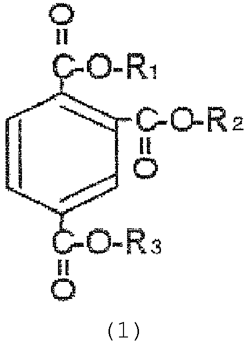 dans laquelle R₁ à R₃ représentent un groupe alkyle et peuvent être identiques ou différents, le rapport de chaîne linéaire de R₁ à R₃ est de 95 % en moles ou plus, le rapport d'un groupe alkyle ayant 7 carbones ou moins à tous les groupes alkyle de R₁ à R₃ est situé dans la plage allant de 0 à 10 % en moles, le rapport d'un groupe alkyle ayant 8 ou 9 carbones à tous les groupes alkyle de R₁ à R₃ est situé dans la plage allant de 0 à 85 % en moles, le rapport d'un groupe alkyle ayant 10 carbones à tous les groupes alkyle de R₁ à R₃ est situé dans la plage allant de 15 à 100 % en moles, le rapport d'un groupe alkyle ayant 11 carbones ou plus à tous les groupes alkyle de R₁ à R₃ est situé dans la plage allant de 0 à 10 % en moles, et
le rapport de chaîne linéaire est le rapport d'un groupe alkyle à chaîne linéaire à tous les groupes alkyle de R₁ à R₃.

2. Composition de résine de chlorure de vinyle pour moulage à partir de poudres selon la revendication 1, comprenant :
100 parties en masse de particules de résine de chlorure de vinyle faites d'une résine de chlorure de vinyle dont le degré moyen de polymérisation est situé de 1500 à 3000, les particules de résine de chlorure de vinyle ayant une granulométrie moyenne située dans la plage allant de 50 à 500 µm ; et
110 à 150 parties en masse d'un plastifiant trimellitate représenté par la formule générale (1) 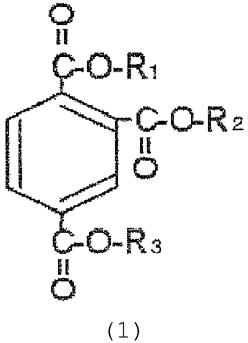 dans laquelle R₁ à R₃ représentent un groupe alkyle et peuvent être identiques ou différents, le rapport de chaîne linéaire de R₁ à R₃ est de 95 % en moles ou plus, le rapport d'un groupe alkyle ayant 7 carbones ou moins à tous les groupes alkyle de R₁ à R₃ est situé dans la plage allant de 0 à 10 % en moles, le rapport d'un groupe alkyle ayant 8 ou 9 carbones à tous les groupes alkyle de R₁ à R₃ est situé dans la plage allant de 0 à 75 % en moles, le rapport d'un groupe alkyle ayant 10 carbones à tous les groupes alkyle de R₁ à R₃ est situé dans la plage allant de 25 à 100 % en moles, le rapport d'un groupe alkyle ayant 11 carbones ou plus à tous les groupes alkyle de R₁ à R₃ est situé dans la plage allant de 0 à 10 % en moles, et le rapport de chaîne linéaire est le rapport d'un groupe alkyle à chaîne linéaire à tous les groupes alkyle de R₁ à R₃.

3. Composition de résine de chlorure de vinyle pour moulage à partir de poudres selon l'une quelconque des revendications 1 et 2, dans laquelle la granulométrie moyenne des particules de résine de chlorure de vinyle est située dans la plage allant de 50 à 250 µm.

4. Composition de résine de chlorure de vinyle pour moulage à partir de poudres selon l'une quelconque des revendications 1 à 3, dans laquelle la granulométrie moyenne des particules de résine de chlorure de vinyle est située dans la plage allant de 100 à 200 µm.

5. Composition de résine de chlorure de vinyle pour moulage à partir de poudres selon l'une quelconque des revendications 1 à 4, comprenant en outre 1 à 30 parties en masse d'un agent de poudrage pour 100 parties en masse des particules de résine de chlorure de vinyle, l'agent de poudrage étant fait de fines particules de chlorure de vinyle ayant une granulométrie moyenne de 0,1 à 10 µm.

6. Composition de résine de chlorure de vinyle pour moulage à partir de poudres selon la revendication 5, dans laquelle le degré moyen de polymérisation de la résine de chlorure de vinyle constituant les fines particules de résine de chlorure de vinyle est situé dans la plage allant de 500 à 2000.

7. Composition de résine de chlorure de vinyle pour moulage à partir de poudres selon la revendication 5 ou 6, dans laquelle le degré moyen de polymérisation de la résine de chlorure de vinyle constituant les particules de résine de chlorure de vinyle est situé dans la plage allant de 800 à 1500.

8. Composition de résine de chlorure de vinyle pour moulage à partir de poudres selon l'une quelconque des revendications 5 à 7, dans laquelle l'agent de poudrage fait de fines particules de résine de chlorure de vinyle est présent à raison de 10 à 25 parties en masse pour 100 parties en masse des particules de résine de chlorure de vinyle.

9. Article moulé en résine de chlorure de vinyle, obtenu par moulage à partir de poudres de la composition de résine de chlorure de vinyle pour moulage à partir de poudres selon l'une quelconque des revendications 1 à 8.

10. Stratifié comprenant une surface de l'objet moulé en résine de chlorure de vinyle selon la revendication 9 et une mousse de polyuréthane.

11. Matériau d'intérieur de véhicule ayant une surface faite de l'objet moulé en résine de chlorure de vinyle selon la revendication 9.

12. Procédé pour produire la composition de résine de chlorure de vinyle pour moulage à partir de poudres selon la revendication 1, comprenant l'étape de mélange
(i) de 100 parties en masse de particules de résine de chlorure de vinyle faites d'une résine de chlorure de vinyle dont le degré moyen de polymérisation est situé dans la plage allant de 1500 à 3000, les particules de résine de chlorure de vinyle ayant une granulométrie moyenne située dans la plage allant de 50 à 500 µm, avec
(ii) 110 à 150 parties en masse d'un plastifiant trimellitate représenté par la formule générale (1) 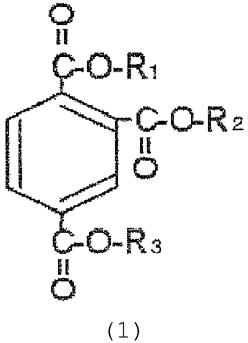 dans laquelle R₁ à R₃ représentent un groupe alkyle et peuvent être identiques ou différents, le rapport de chaîne linéaire de R₁ à R₃ est de 95 % en moles ou plus, le rapport d'un groupe alkyle ayant 7 carbones ou moins à tous les groupes alkyle de R₁ à R₃ est situé dans la plage allant de 0 à 10 % en moles, le rapport d'un groupe alkyle ayant 8 ou 9 carbones à tous les groupes alkyle de R₁ à R₃ est situé dans la plage allant de 0 à 85 % en moles, le rapport d'un groupe alkyle ayant 10 carbones à tous les groupes alkyle de R₁ à R₃ est situé dans la plage allant de 15 à 100 % en moles, le rapport d'un groupe alkyle ayant 11 carbones ou plus à tous les groupes alkyle de R₁ à R₃ est situé dans la plage allant de 0 à 10 % en moles, et le rapport de chaîne linéaire est le rapport d'un groupe alkyle à chaîne linéaire à tous les groupes alkyle de R₁ à R₃.

13. Procédé pour produire une composition de résine de chlorure de vinyle pour moulage à partir de poudres selon la revendication 12, dans lequel un agent de poudrage fait de fines particules de chlorure de vinyle ayant une granulométrie moyenne de 0,1 à 10 µm est mélangé de telle manière que l'agent de poudrage soit présent à raison de 1 à 30 parties en masse pour 100 parties en masse des particules de résine de chlorure de vinyle.

14. Procédé pour produire une composition de résine de chlorure de vinyle pour moulage à partir de poudres selon la revendication 12 ou 13, dans lequel le mélange est effectué par mélange à sec.
